# EUROPEAN PATENT APPLICATION

(11) **EP 3 838 539 A1**
(43) Date of publication of application: **23.06.2021**
(21) Application number: 19306668.5
(22) Date of filing: 17.12.2019
(51) Int. Cl.: B29C 33/12, B29D 11/00, B29C 45/14, B29C 39/10, B29C 43/18, B29L 11/00

(54) **METHODS, APPARATUSES, AND SYSTEMS FOR A WAFER HAVING A VISCOELASTIC MATERIAL**

(71) Applicant: ESSILOR INTERNATIONAL, 94220 Charenton-Le-Pont (FR)
(72) Inventor: TOKARSKI, Zbigniew, DALLAS, TX 75234 (US); BEGG, Eric, DALLAS, TX 75234 (US); DRAMMEH, Ahmed, DALLAS, TX 75234 (US); CHIU, Hao-Wen, DALLAS, TX 75234 (US); AMAYA, Mauricio, DALLAS, TX 75234 (US); BUSSIERE, Paul, Dallas, TX 75234 (US)
(74) Representative: Plasseraud IP

(57) **Abstract**

The present disclosure includes systems, devices, and methods for an optical system for manufacturing an optical article. In some aspects, the systems and devices are wafers for use in the manufacture of an optical article. The wafer includes a plurality of first portions and a plurality of second portions. The first portions may include a corresponding first radius and the second portions may include a corresponding second radius that is greater than the first radius. The second radius of each second portion may correspond to a radius of a mold cavity such that while the wafer is positioned within the cavity, a gap is defined between a cavity wall and each first portion.

## Description

### TECHNICAL FIELD

The present disclosure relates generally to an optical article and more particularly, but without limitation, to the manufacture of optical wafers for use with eyewear apparatus.

### BACKGROUND

Optical articles, such as lenses, are typically made by functional wafers. Theses wafers may be subject to various manufacturing processes during the formation of an optical article. For example, flat wafers are typically transformed (e.g., thermoformed) from a flat circular wafer to a concave dome-shaped functional wafer to correspond to a base curve of the optical article. The thermoformed functional wafers are then often used in an injection overmolding process to produce corrective or non-corrective eyeglass lenses. Often, the wafer includes a thick center layer of soft thermoplastic material (e.g., soft thermoplastic layer or soft adhesive layer) as it offers certain advantages, such as soft polymer segment, ductility, and chemical compatibility during the formation of the wafers and optical articles. However, there are several complications that arise from using the soft thermoplastic layer in both thermoforming and injection molding processes.

To illustrate, to maintain the desired ductility of the wafer, the soft thermoplastic layer of the wafer typically has a glass transition temperature well below that of the injection molding temperature that results in outflow (e.g., edge bleeding) of the soft layer. This edge bleeding creates unwanted contamination of the insert, mold cavity and/or space between the outer side surface of the insert and the mold cavity walls. This contamination may prevent removal of the insert from the mold block and/or create buildup of unwanted material on the molding surfaces which affects product yields, increases down time due to mold cleaning, and leads to imperfections in subsequent lens formation such as, for example, non-uniform thickness of the soft thermoplastic layer which may result in optical distortions or cosmetic issues in the lenses. Some conventional approaches to preventing edge bleeding have included using outer layers that have a larger diameter than the soft, central layer to prevent the central layer from bleeding into the mold cavity. However, such wafer geometry is difficult to produce on a large scale and the soft layer is still visible after injection molding. Accordingly, such solutions offer little help in reducing manufacturing time and produce lenses with undesirable cosmetic properties.

### SUMMARY

The present disclosure is generally related to systems, devices, and methods for manufacturing an optical article. For example, a device (or an apparatus) for manufacturing an optical article may include a wafer that includes a plurality of first portions and a plurality of second portions. The second portions may be positioned between two first portions. The wafer may be configured to reduce or prevent insert and/or mold cavity contamination from a soft thermoplastic layer (or a soft adhesive layer) of the functional wafer during processing, such as thermoforming or injection molding. To illustrate, each first portion includes a corresponding first radius and each second portion (e.g., spur) includes a corresponding second radius that is greater than the first radius. The second radius of each second portion may correspond to a radius of a mold cavity such that while the wafer is positioned within the cavity, a gap is defined between a cavity wall and each first portion. During optical article formations, moldable material may flow into the gap formed between first portions and the cavity wall to encapsulate liquefied material that oozes out from an elastomeric layer of the wafer to prevent the liquefied material from contaminating the cavity wall. In this manner, the containment band enables injection of molten material injected and reduced or prevents contamination of outflow material.

In some implementations, second portions (e.g., spurs) may stabilize wafer 330 during the injection molding process. For example, a plurality of second portions are spaced along outer wall of the wafer to prevent the wafer from moving within the mold cavity. As such, the wafer may remain centered during the entire injection molding process to produce high-quality optical wafers. Second portions (e.g., a gate stop) may also prevent contamination of the mold. For example, a second portion may be configured to extend at least partially within a gate of a mold cavity to prevent molten material (e.g., polycarbonate) from flowing on a convex side of the wafer. In some implementations, the wafer may define a recess to produce a gap between surfaces of a mold component (e.g., insert, mold block) that defines the mold cavity when the wafer is centered within the mold cavity. Recesses may prevent outflow from an elastomeric layer from reaching and contaminating the mold device.

In some of the foregoing implementations of the present apparatuses, an apparatus includes a wafer for producing optical article. In some such implementations, the wafer includes a laminate having a plurality of layers, at least one of which includes an outer wall between a top surface and a bottom surface of the wafer. The outer wall defines the plurality of first portions and the plurality of second portions. In the foregoing implementations, each first portion includes a corresponding first radius and each second portion includes a corresponding second radius that is greater than the first radius. In some such implementations, second portions collectively span less than 20% of the outer wall.

In some implementations of the present apparatuses, each second portion is interposed between two of the plurality of first portions. In some of the foregoing implementations, the plurality of first portions comprise a majority of the area of outer wall of at least one layer. In some implementations, the second portion(s) includes a plurality of spurs. Additionally, or alternatively, at least one second portion may include or correspond to a gate stop. In some such implementations, a width of the gate stop is greater than a width of a spur. For example, the spur may include a width between 1 millimeter (mm) and 6 mm and the gate stop may include a width between 4 and 14 mm. In some of the foregoing implementations, the plurality of spurs are positioned symmetrically about a first plane that extends from a center of gate stop to a center of tab. The plurality of second portions may be positioned symmetrically about a first axis that is parallel to top surface of wafer and bisects the wafer.

In some of the foregoing implementations, the wafer is configured to be disposed within a cavity defined by a surface of a mold. In such implementations, while wafer is disposed within the cavity, at least one of the plurality of second portions contacts the surface of the mold to define a gap between each of the plurality of first portions and the surface of the mold. In some implementations, outer wall defines a third portion having a third radius that is greater than the second radius, the third portion configured to align the wafer in a mold cavity. For example, the third portion may include a tab. In some implementations, outer wall defines a fourth portion having a fourth radius that is less than first radius, the fourth portion configured to prevent movement of the wafer while disposed within the cavity. For example, the fourth portion may include a notch.

Each radius of the first, second, third, or fourth radii may be measured from a longitudinal axis to outer wall, the longitudinal axis being orthogonal to top surface of wafer and intersecting a center of the wafer. In some implementations, each second radius of the plurality of second portions is substantially equal. In some of the foregoing implementations, outer wall defines a first radius of curvature at an intersection of at least one first portion of the plurality of first portions and a second portion of the plurality of second portions

In some implementations, the plurality of layers (of the wafer) include an inner layer, a first outer layer, and a second outer layer. In some such implementations, inner layer includes an upper surface and a lower surface. First outer layer may be coupled to lower surface of inner layer and define bottom surface of wafer. Additionally, or alternatively, second outer layer may be to upper surface of inner layer and define top surface of wafer. In some of the foregoing implementations, inner layer includes a first matrix material and least one of the first and second outer layers includes a second matrix material. In some such implementations, a glass transition temperature of first matrix material is lower than a glass transition temperature of second matrix material. For example, first matrix material includes a thermoplastic polyurethane (TPU) or a semi-crystalline polyether-block polyamide (PEBA). In some such implementations, second matric material includes a polycarbonate. In some implementations, at least one of the first and second outer layers includes a thickness that is greater than thickness inner layer. The thickness of inner layer is less than or equal to 0.100 millimeters (mm) and, in some implementations, the thickness of first and second outer layers is greater than 0.250 mm.

In some of the foregoing implementations of the present systems, a system includes a die for forming a wafer used in manufacture of an optical article. In such implementations, the die includes a sidewall that defines a plurality of first portions, a plurality of second portions, and a third potion. In some of the foregoing implementations, each first portion includes a corresponding first radius. In some such implementations, each second portion includes a corresponding second radius that is greater than first radius. In some of the foregoing implementations, sidewall includes the third portion having a third radius that is greater than second radius.

In some of the foregoing implementations of the present methods (e.g., of forming a wafer an optical article), a method includes forming a wafer. In some implementations, the method includes inserting the wafer into a cavity such that the plurality of projections abut a surface of the mold and a gap is formed between the plurality of first portions and the surface of the mold. In some such implementations, less than 10% of an outer wall of the wafer may be in contact with the mold device while the wafer is inserted into the cavity. Some methods may include aligning a top of the wafer with a gate of the mold device.

In some implementations of the present methods, the method may include injecting a moldable material into the cavity. In some implementations, the method includes setting the moldable material to form a semi-finished lens including the wafer and the moldable material. Some of the foregoing methods also include distributing the moldable material into a gap defined between the outer wall of the wafer and a surface of the mold insert. In some implementations, the gap is defined between a first portion of the wafer and the surface of the mold insert.

As used herein, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed implementations, the term "substantially" may be substituted with "within [a percentage] of' what is specified, where the percentage includes .1, 1, 5, and 10 percent.

The term "about" as used herein can allow for a degree of variability in a value or range, for example, within 10%, within 5%, or within 1% of a stated value or of a stated limit of a range and includes the exact stated value or range. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed implementation, the term "substantially" may be substituted with "within [a percentage] of' what is specified, where the percentage includes 0.1, 1, or 5 percent; and the term "approximately" may be substituted with "within 10 percent of' what is specified. The statement "substantially X to Y" has the same meaning as "substantially X to substantially Y," unless indicated otherwise. Likewise, the statement "substantially X, Y, or substantially Z" has the same meaning as "substantially X, substantially Y, or substantially Z," unless indicated otherwise. The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or. Additionally, the phrase "A, B, C, or a combination thereof' or "A, B, C, or any combination thereof" includes: A alone, B alone, C alone, a combination of A and B, a combination of A and C, a combination of B and C, or a combination of A, B, and C.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1 % to about 5%" or "about 0.1 % to 5%" should be interpreted to include not just about 0.1 % to about 5%, but also the individual values (e.g., 1 %, 2%, 3%, and 4%) and the sub-ranges (e.g., 0.1 % to 0.5%, 1.1 % to 2.2%, 3.3% to 4.4%) within the indicated range. The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any implementation of any of the systems, methods, and article of manufacture can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb. Additionally, the term "wherein" may be used interchangeably with "where". Further, a device or system that is configured in a certain way is configured in at least that way, but it can also be configured in other ways than those specifically described. The feature or features of one implementation may be applied to other implementations, even though not described or illustrated, unless expressly prohibited by this disclosure or the nature of the implementations.

Some details associated with the implementations are described above, and others are described below. Other implementations, advantages, and features of the present disclosure will become apparent after review of the entire application, including the following sections: Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1A** is a diagram that illustrates an example of stages of a process of an optical system for manufacturing an optical article.
**FIG. 1B** is a top view of the wafer used in the process for manufacturing an optical article of FIG. 1A.
**FIG. 2** is a top view of an example of a wafer of the optical system.
**FIG. 3** is a top view of another example of a wafer of the optical system.
**FIG. 4** is a top view of another example of a wafer of the optical system.
**FIG. 5** is a top view of another example of a wafer of the optical system.
**FIG. 6** is a top view of another example of a wafer of the optical system.
**FIG. 7** is a top view of another example of a wafer of the optical system.
**FIG. 8A** is a top view of an example of a die of the optical system.
**FIG. 8B** is a top view of another example of a die of the optical system.
**FIG. 9** is a flowchart illustrating an example of a method of forming an optical article.

### DETAILED DESCRIPTION OF THE DRAWINGS

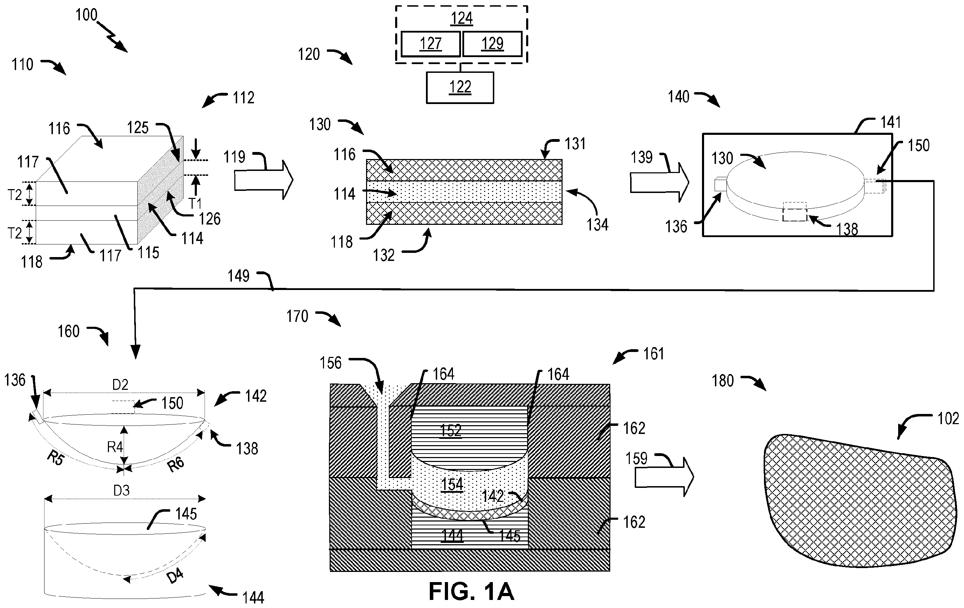

Referring to FIG. 1A, a diagram of illustrative stages of a system for manufacturing an optical article, such as a lens (e.g., a semi-finished (SF) lens product), is shown and generally designated 100. System 100 may be configured to produce a non-contaminating optical wafer for use in manufacture of the optical article.

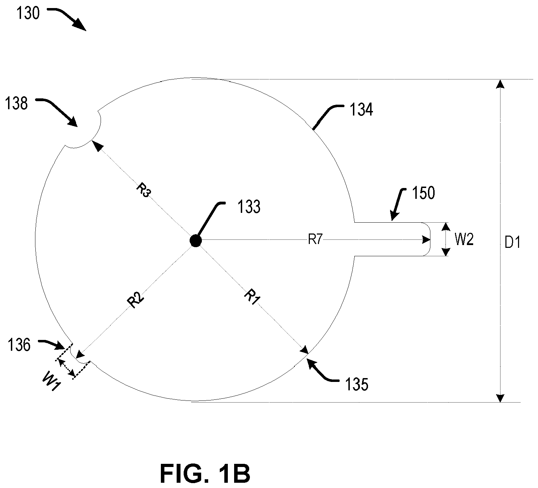

At a first stage 110, a laminate 112 having one or more layers may be provided or formed. Each layer of laminate 112 may include a thermoplastic material consolidated (e.g., by pressure and temperature) to form a stack. As shown in FIG. 1, laminate 112 includes an inner layer 114 and one or more outer layers that each cover at least a portion of the inner layer. For example, a first outer layer 116 may be disposed on a top surface of inner layer 114 and a second outer layer 118 may be disposed on a bottom surface of the inner layer. Inner layer 114 and outer layers 116, 118 may be coupled together in any suitable manner such as, for example, via an adhesive layer (e.g., through adhesive lamination, adhesive coating lamination, or the like), without an adhesive layer (e.g., extrusion lamination), or any other known process.

Inner layer 114 may include a first matrix material 115. In some implementations, first matrix material 115 comprises an optically functional thermoplastic elastomeric film such as, for example, a thermoplastic polyurethane ("TPU") (e.g., amorphous TPU, Tecoflex EG85A, Tecoflex EG80A, Estane ALRE77A-V, Estane AG 8451, Estane VSN F5000, or the like), a semi-crystalline Polyether-block-polyamides (PEBA) (e.g., Pebax 5533, Pebax 4533, Pebax 4033, Pellethane 80Aor the like), a soft adhesive layer, or any other thermoplastic elastomeric material. In some implementations, one or more additives may be included within first matrix material 115. For example, an optical additive and/or a process additive (e.g., polarizing dye, photochromic dye, tint dye, dye absorbers of selective wavelengths, electrochromic dyes, stabilizers, flow modifiers, and/or the like) can be blended with first matrix material 115 to produce an optically functional film (e.g., inner layer 114). In some implementations, inner layer 114 includes a first surface (e.g., upper surface 125) and a second surface (e.g., a lower surface 126) opposite the first surface. Inner layer 114 may include a thickness T1 measured from upper surface 125 to a lower surface 126 of the inner layer along a straight line, such as a straight line that is orthogonal to the first surface, the second surface, or both. In some implementations, T1 is less than or equal to 0.300 millimeters (mm) such as less than 0.150 mm or between 0.025 and 0.075 mm, as an illustrative, non-limiting example.

Outer layers 116, 118 may include a second matrix material 117. In some implementations, second matrix material 117 includes a transparent polycarbonate film (e.g., Lexan PC, or the like). Second matrix material 117 may have a higher glass transition temperature (or melt temperature) than first matrix material 115. Each outer layer 116, 118 may include a thickness T2 measured from a top surface to a bottom surface of the outer layer along a straight line. In some implementations, T2 is less than or equal to 0.200 millimeters (mm) such as less than 0.75 mm or between 0.25 and 0.65 mm, as an illustrative, non-limiting example. Thickness T2 of outer layers 116, 118 may be greater than thickness of inner layer 114 to prevent defects from forming during wafer formation; however, in other implementations, inner layer 114 and outer layers 116, 118 may be sized and shaped in any suitable manner. Although outer layers 116, 118 are described a both having the second matrix material 117, in other implementations, one of the outer layers 116, 118 includes second matrix material and the other of the outer layers 116, 118 includes a third matrix material that is different from the second matrix material. In some implementations, outer layers 116, 118 are coupled to the first layer and covers at least a portion of upper surface 125 or lower surface 126.

Laminate 112 from first stage 110 is provided to a second stage 120 indicated by arrow 119. At second stage 120, laminate 112 is positioned relative to a die 122. Die 122 may be configured to remove (e.g., cut) a wafer from laminate 112 from the stack. As shown, die 122 is used to cut a generally circular or oval shaped disk that forms wafer 130. Die 122 may use heat, chemicals, force (e.g., cutting edge), or any suitable means to remove wafer 130 from laminate 112.

Die 122 may be coupled to (or include) a controller 124 (e.g., control device), such as a processor 127 and a memory 129 (e.g., storage device). Controller 124 may be coupled to or included in die 122 and configured to store model data, such as two or three dimensional model data of wafer 130 or optical article 102 to be manufactured. For example, model data may include outline data (e.g., cut data) that corresponds to an outline of a wafer 130 that is to be cut from laminate 112. Die 122 may be configured to form a plurality of wafers 130 from laminate 112 according to the model data. In this way, die 122 may be configured receive model data corresponding to a desired shape of wafer 130 and interact with laminate 112 to form the wafer, or a plurality of wafers, according to the model data. For example, controller 124 may control one or more components of or coupled to die 122, such as heating elements, hydraulic press, or other equipment.

Memory 129 may include read only memory (ROM) devices (e.g., programmable read-only memory (PROM), erasable programmable read-only memory (EPROM), electrically erasable programmable read-only memory (EEPROM), optical storage, or the like), random-access memory (RAM) devices (e.g., synchronous RAM (SRAM), dynamic RAM (DRAM), synchronous dynamic RAM (SDRAM), or the like), one or more HDDs, flash memory devices, SSDs, other devices configured to store data in a persistent or non-persistent state, or a combination of different memory devices. Memory 129 may store instructions that, when executed by processor 127, cause processor 127 to perform, initiate, and/or control the operations described herein. Although described as including processor 127, in other implementations, controller 124 can include application specific integrated circuits (ASIC), field-programmable gate arrays (FPGA), very large scale integrated (VLSI) circuits, or other circuitry. Additionally, controller 124 may include an interface, such as a wired interface or a wireless interface, to enable communication with one or more components of system 100. Controller 124 may also include a user interface to enable a user to control operations of system 100.

Wafer 130 may include a top surface 131 (e.g., a first surface), a bottom surface 132 (e.g., a second surface) and an outer wall 134. In some implementations, top surface 131 and bottom surface 132 include or correspond to the top surface and the bottom surface of laminate 112, respectively. For example, wafer 130 may include the same layup (e.g., inner layer 114 and one or more outer layers 116, 118) as described above with reference to laminate 112. Outer wall 134 may extend between top surface 131 and bottom surface 132 of wafer 130. In some implementations, outer wall 134 may intersect with top and bottom surfaces 131, 132 to define a periphery of wafer 130. For example, outer wall 134 may include or correspond to a side wall of at least one (up to and including all) layers of laminate 112 (e.g., inner layer 114 and outer layers 116, 118).

Referring now to FIG. 1B, a top view of wafer 130 is shown. In some implementations, outer wall 134 of wafer 130 may define a plurality of first portions 135 and one or more features, such as, one or more projections (e.g., one or more second portions 136) and/or one or more recesses (e.g., one or more fourth portions 138). In some implementations, wafer may include a tab (e.g., at least one third portion 150). Although not depicted in FIG. 1, wafer 130 may include one or more other features such as, for example, a notch, shoulder, rib, and/or the like.

The one or more features (e.g., second portion 136 and/or fourth portion 138) may each correspond to a respective feature of die 122. As shown, first portions collectively spans along a majority of the arc length of outer wall 134. In some implementations, adjacent first portions 135 may be separated by at least one feature (e.g., a projection) of the one or more features. For example, second portion 136 (e.g., spur or gate stop) may define an inflection point along the perimeter of wafer 130 at an intersection of the projection and a first portion 135.

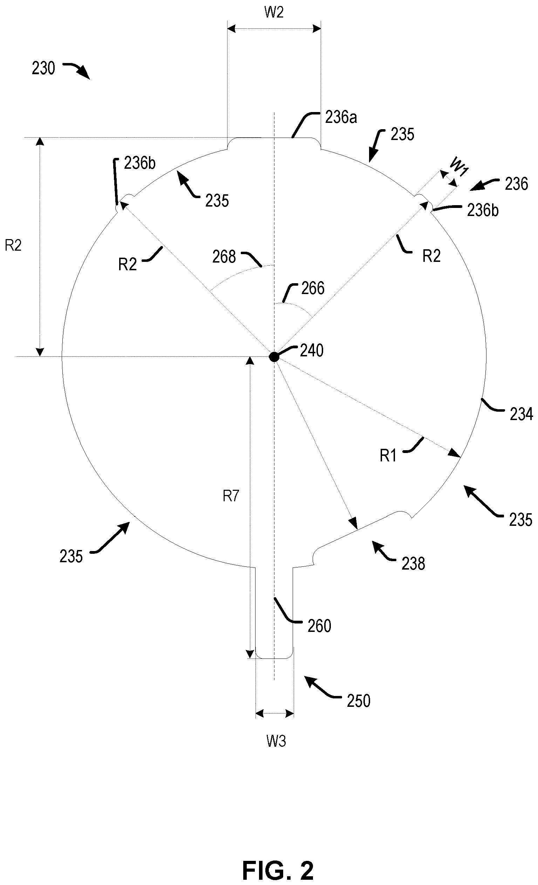

Second portion 136 may correspond to a portion of outer wall 134 that includes a radius that is greater than a radius of first portion 135 of wafer 130 and fourth portion 138 may correspond to a portion of the outer wall that includes a radius that is less than a radius of first portion 135. To illustrate, wafer 130 includes a center point 133 (e.g., a center or a reference axis) that corresponds to a central axis that extends through the wafer, described further herein at least with reference to FIG. 2. Wafer 130 includes a first radius R1 measured from center point 133 of wafer 130 to first portions 135 of outer wall 134 along a straight line that is substantially parallel to top surface 131. As shown in FIG. 1B, wafer 130 includes a second radius R2 measured from center point 133 of wafer 130 to one of the one or more second portions 136 (e.g., projections) along a straight line. Second radius R2 is greater than first radius R1. For example, second radius R2 is at least 5% greater than the first radius R1.

In some implementations, wafer 130 includes a third radius R3 measured from center point 133 of wafer 130 to one of the fourth portions 138 along a straight line. Third radius R3 is less than or equal to first radius R1. In this way, second radius R2 is greater than first radius R1 and third radius R3 is less than first radius R1 to define second portion 136 and fourth portion 138 of wafer 130. Wafer 130 includes a first transverse dimension D1 (e.g., wafer diameter) measured from opposing sides of outer wall 134 along a straight line. First transverse dimension D1 may correspond to two times a radius of the first portion 135.

In some implementations, outer wall 134 includes a third portion 150 (e.g., a tab). In such implementations, wafer 130 includes a tab radius R7 measured from center point 133 of wafer 130 to an outermost portion of tab (e.g., 250) along a straight line that is substantially parallel to top surface 131. Third portion 150 (e.g., tab) may be included in implementations where the optical article is polar. Second portion 136 may include a width (e.g., W1) that is between 2 to 6 mm.

Referring again to FIG. 1A, wafer 130 from second stage 120 are provided to a third stage 140 as indicated by an arrow 139. At third stage 140, wafer 130 may be provided to thermoform equipment 141 (e.g., a thermoform chamber) and thermoformed to from a concave wafer 142 that is configured to fit within a mold insert 144, 152, as described further herein. Thermoform equipment 141 may include or correspond to a vacuum forming machine or the like. In some implementations, wafer 130 may be thermoformed (e.g., via heat and pressure) to a semi-spherical dome shape suitable for use in making optical lenses. In some implementations, wafer 130 may be thermoformed to generate a thermoformed wafer 142 having a concave side and convex side similar to that of optical article 102. To illustrate, thermoformed wafer 142 may be shaped to include or correspond to a desired lens diameter (e.g., between 60 mm and 90 mm), a desired base curve of the lens or base curve of the mold insert 144 (e.g., between 0.25 and 8.50), or the like. In some implementations, the base curve of the mold insert 144, 152 is substantially equal to, different, or larger or smaller than the base curve of the wafer 142.

Wafer 130 (e.g., thermoformed wafer 142) from third stage 140 is provided to a fourth stage 160 as indicated by an arrow 149. At fourth stage 160, wafer 142 may be disposed within a mold insert 144, 152.

Wafer 142 includes the same layup as wafer 130. For example, wafer 142 may include the one or more second portions 136 (e.g., one or more projections) and/or one or more fourth portions 138 (e.g., one or more recesses) defined by wafer 130. Wafer 142 may include a first arc radius R4 (e.g., first arc length) is measured from measured from a center (e.g., 133) of wafer 142 to first portion 135 of outer wall 134 along the convex surface of wafer 142. Wafer 142 includes a second arc radius R5 (e.g., second arc length) measured from measured from the center of wafer 142 to one of the one or more second portions 136 along the convex surface of wafer 142. First arc radius R4 and second arc radius R5 corresponds to (e.g., is substantially equal to) first radius R1 and second radius R2, respectively, of wafer 130. Additionally, or alternatively, wafer 142 may include a third arc radius R6 (e.g., third arc length) measured from measured from the center of wafer 142 to one of the one or more fourth portions 138 (e.g., recesses) along the convex surface of wafer 142. Third arc radius R6 corresponds to third radius R3. Consequently, the size and shape of wafer 130 may be designed based on a desired size and shape of wafer 142. For example, wafer 130 may be non-circular or oval shaped if wafer 130 shrinks in one dimension more than in another dimension so that thermoformed wafer 142 results in a substantially circular shape.

Wafer 142 may include a maximum transverse dimension D2 (e.g., spherical diameter) that is less than a corresponding diameter of wafer 130 (e.g., flat wafer diameter) as a result of the thermoforming process. Likewise, a circumference of wafer 130 may be larger than that of thermoformed wafer 142 by a circumference ratio (e.g., D1/D2). If the circumference ratio is greater than a critical ratio, edge deformation may occur and the extra length at the edge of the wafer must be accommodated by either compression, out-of-plane deformation, buckling, crease formation at the wafer edge or other non-desirable accommodation effect. Second portion(s) 136 (e.g., projections) and/or fourth portion(s) 138 (e.g., recesses) may act to decrease an effective wafer diameter of the wafer so as to remain below the critical edge deformation ratio. For example, in implementations where a majority of outer wall 134 corresponds to first portions 135 may result in a circumference ratio of thermoformed wafer 142 being lower than the critcal edge deformation ratio. In this manner, wafer 142 may decrease the risk of edge defomration during the thermoforming process and also decrease edge bleeding, as described herein.

Mold inset 144 may include a mold surface 145 that is configured to receive wafer 142. Mold inset 144 may include a spherical diameter D3 measured from opposing sides of a top edge of mold surface 145 along a straight line and an arc length D4 measured from measured from a center of mold surface 145 to a top edge along a concave portion of the mold surface. In some implementations, wafer 142 is shaped allow the wafer edge (e.g., outer wall 134) to extend to the top edge of mold insert 144. In this way, wafer 142 may be secured within mold insert 144 and to prevent the wafer from falling out of the cavity during loading operations. In some implementations, first arc radius R4 may be less than arc length D4 and second arc radius R5 may be substantially equal to the arc length D4. For example, first portions (e.g., 135) of wafer 142 may be spaced from an edge of wafer, while at least one of the second portions 136 extend to the top edge of mold insert 144 to secure the wafer during injection molding operations, described below. Accordingly, wafer 142 enables a majority of outer wall (e.g., first portions 135) to be spaced from the components of an injection molding process to mitigate contamination of the components of system 100 while still securing the wafer to produce a high-quality optical article.

Wafer 142 and mold insert 144 from fourth stage 160 are provided to a fifth stage 170 as indicated by an arrow 149. At fifth stage 170, wafer 142 may be disposed within a mold device 161. Mold device 161 may include a mold block 162, and mold inserts 144, 152. To further illustrate, wafer 142 may be disposed within a mold insert 144, 152 and the mold insert is subsequently disposed within a space defined by sidewalls 164 of mold block 162. Mold insert 152 and mold insert 144 may be sized and shaped such that when they are coupled together, mold inserts 144, 152 cooperate to define a cavity 154 that corresponds to a desired shape of optical article 102. For example, mold insert 152 may include convex surface and mold insert 144 may include a concave surface (e.g., 145) having a same, similar, or larger or smaller, base curve (e.g., radius of curvature) that define opposing surfaces of a cavity 154. Sidewall 164 of mold block 162 may cooperate with mold inserts 144, 152 to define a portion of cavity 154. In some implementations, at least one of the one or more second portions 136 (e.g., projections) contacts a mold surface (e.g., sidewall 164 of mold block 162) that defines cavity 154 so that a gap may be formed between outer wall 134 of wafer 142 and the mold surface for first portions 135 and fourth portion(s) 138 of outer wall 134.

As shown, moldable material 156 is injected onto the wafer 142 while the wafer is positioned within cavity 154. Moldable material 148 may include a transparent or semitransparent thermoplastic material, such as polycarbonate, thermoplastic urethane, polyacrylate, polyester, copolyester, polymethacrylate, poly(methyl methacrylate), polystyrene, polyamide, polysulfone, polyphenylsulfone, polyetherimide, polypentene, polyolefin, ionomer, ethylene methacrylic acid, cyclic olefin copolymer, acrylonitrile, styrene maleic anhydride, a copolymer thereof, or a derivative or mixture thereof. Moldable material 156 (e.g., matrix material) may be heated, into a liquid form, and injected onto wafer 142. For example, moldable material 156 is injected at a high temperature (up to 300 C) and high pressure (500-30,000 psi) so that the moldable material takes the form of cavity 154 and can then be cooled to solidify. The moldable material 156 may then fuse to wafer 142 and to form a semi-finished optical article. Injection of moldable material 156 onto wafer 142 may cause one of the layers (e.g., 114) of the wafer to transform into a low viscous (e.g., liquid) state. Moldable material 156 may be injected at a temperature that is greater than a glass transition temperature of at least one layer (e.g., thermoplastic elastomeric layer) of wafer 142. For example, the molten material (e.g., 156) may be injected at a temperature that is much greater than the glass transition of first matrix material 115 of inner layer 114 such that the inner layer becomes fluid (e.g., a low viscous liquid) and is capable of flowing out under pressure (i.e., oozing out) from wafer 142 onto a surface that defines cavity 154 or between an outer side surface of inserts (e.g., 144, 152) and the walls (e.g., 164) of mold block 162.

In the depicted implementations, second portion(s) 136 (e.g., projections) may allow a majority of outer wall 134 to be spaced away from sidewall 164 of mold block 162. In this manner, moldable material 156 may be dispersed between the gap defined between portions of outer wall 134 that do not define a projection and the mold surface defines cavity 154. As a result, moldable material 156 may encapsulate liquefied material (e.g., 115) that oozes out from an elastomeric layer (e.g., 114) of wafer 142 to prevent the liquefied material from contaminating the mold inserts 144, 152 or mold block 162. Accordingly, wafer 142 may reduce or eliminate contamination of one or more components (e.g., mold insert 144, 152 or mold block 162) of system 100, thus decreasing manufacturing time of optical article. Specifically, wafer 142 may prevent liquefied material from oozing between inserts 144, 152 and sidewall 164 of mold block 162.

Wafer 142 and moldable material 156 are provided to a sixth stage 180 as indicated by an arrow 159. At sixth stage 180, wafer 142 and moldable material 156 are removed from cavity 154 and one or more finishing processes may, but need not be, performed to form optical article 102, such as a lens, glasses, goggles, other form of eyewear, etc. For example, some in some implementations, optical article 102 may be subjected to a finishing process such as, for example, coating, stamping, printing, grinding, polishing, buffing, etching, edging, machining or other process may occur to produce a finished optical article. As shown, wafer 142 and moldable material 156 are edged to fit a shaped lens, however, in other implementations, article 102 will contain a similar shape as cavity 154 (e.g., rounded). As wafer 142 did not cause contamination of mold inserts 144, 152 or mold block 162, the inserts may be easily removed from mold block and a second wafer (e.g., 142) may be placed within cavity 154 and a second optical article (e.g., 102) may be formed without cleaning of the mold insert or mold block.

In some implementations, controller 124 may be configured to control operations of one or more components of system 100 other than die 122. For example, controller 124 may control operation of thermoform equipment 141, mold device 161, or other components of system 100. Although described as a single controller (e.g., a single processor), in other implementations, controller 124 may include multiple devices or processors (e.g., a processor system) that perform the control operations. For example, controller 124 may be a distributed system with multiple processors that each perform some of the control operations described herein. To further illustrate, a first device or processor may control operation of die 122 and a second device or processor may control operation of mold device 161 or another component of system 100.

In some implementations, system 100 may include wafer 130, 142 for producing optical article 102. In some implementations, wafer 130, 142 includes laminate 112 having a plurality of layers (e.g., 114, 116, 118). In such implementations, at least one of the layers (114, 116, 118) includes an outer wall 134 between a top surface 131 and a bottom surface 132. The outer wall 134 defines a plurality of first portions 135 and a plurality of second portions 136. In the foregoing implementations, each first portion 135 includes a corresponding first radius R1 and each second portion 136 having a corresponding second radius R2 that is greater than the first radius R1.

In some of the foregoing implementations, during formation of optical article 102, wafer 130 is configured to be disposed within a cavity 154 defined by a surface (e.g., 145, 164) of mold device 161. In such implementations, while wafer 130 is disposed within cavity 154, at least one of the plurality of second portions 136 contacts the surface of mold device 161 to define a gap between each of the plurality of first portions 135 and the surface of mold device 161. In some implementations, outer wall 134 defines a third portion 150 having a third radius R7 that is greater than the second radius R2. The third portion 150 (e.g., a tab) may be configured to align the wafer in cavity 154. In some implementations, outer wall 134 defines a fourth portion 138 (e.g., a recess or notch) having a fourth radius R3 that is less than first radius R1. The fourth portion 138 may be configured to prevent movement of the wafer while disposed within cavity 154.

In some of the foregoing implementations, each second portion 136 includes a width (e.g., W1) between 1 millimeter (mm) and 6 mm. In some implementations, second portion 136 may include a positioning spur (e.g., a centering spur) and/or a gate stop. In such implementations, a width of the gate stop is greater than a width (e.g., W1) of the spur. The width of the gate stop may be between 4 and 14 mm. Additionally, or alternatively, the plurality of spurs (e.g., 136) are positioned symmetrically about a first plane that extends from a center of the gate stop (e.g., 136), through center point 133, to a center of third portion 150 (e.g., tab). In some implementations, each second portion 136 is interposed between two of the plurality of first portions 135. In some of the foregoing implementations, the plurality of first portions 135 comprise a majority of an area of outer wall 134 of at least one layer.

Each radius of the first (R1), second (R2), third (R7), or fourth (R3) radii is measured from a longitudinal axis to outer wall 134. The longitudinal axis may be orthogonal to top surface 131 of wafer 130 and intersecting a center point 133 of wafer 130. In some implementations, each second radius R2 of the plurality of second portions 136 is substantially equal. In some of the foregoing implementations, outer wall 134 defines a first radius of curvature at an intersection of at least one first portion of the plurality of first portions 135 and a second portion of the plurality of second portions 136.

In some implementations, the plurality of layers (e.g., 114, 116, 118) include an inner layer 114, a first outer layer 116, and a second outer layer 118. In some such implementations, inner layer 114 includes an upper surface 125 and a lower surface 126. First outer layer 116 may be coupled to upper surface 125 of inner layer 114 and define top surface 131 of wafer 130. Additionally, or alternatively, second outer layer 118 may be coupled to lower surface 126 of inner layer 114 and define bottom surface 132 of wafer 130. In some of the foregoing implementations, inner layer 114 includes a first matrix material 115 and least one of the first and second outer layers 116, 118 includes a second matrix material 117. In some such implementations, a glass transition temperature of first matrix material 115 is lower than a glass transition temperature of second matrix material 117. For example, first matrix material 115 includes a thermoplastic polyurethane (TPU) or a semi-crystalline polyether-block polyamide (PEBA). In some such implementations, second matrix material 117 includes a polycarbonate. In some implementations, at least one of the first and second outer layers 116, 118 includes a thickness T2 that is greater than thickness T1 of inner layer 114. Thickness T1 of inner layer 114 is less than or equal to 0.100 millimeters (mm) and, in some implementations, thickness T2 is greater than 0.250 mm.

Referring now to FIG. 2, aspects of a wafer 230, for use in manufacture of an optical article, are shown. For example, FIG. 2 shows a top view of an example of wafer 230. Wafer 230 may include or correspond to wafer 130. As shown, wafer 230 is generally circular (e.g., circular cylinder) in shape, however, wafer 230 may be elliptical, rounded, or otherwise suitably shaped to form an optical article, such as optical article 102.

Wafer 230 includes a top surface, a bottom surface, and an outer wall 234 that correspond to top surface 131, bottom surface 132, and outer wall 134. In some implementation, wafer 230 includes a plurality of layers such as, for example, an inner layer, a top layer and a bottom layer. The layers may correspond to layers 114, 116, 118 as described above with reference to FIG. 1A. Each layer (e.g., 114, 116, 118) of wafer 230 may be aligned to form the wafer. For example, each layer can be aligned so that a center of each layer is aligned along a central axis 240. The layers (e.g., 114, 116, 118) may be asymmetric, symmetric, mono-axially stretched, bi-axially stretched, or the like.

Outer wall 234 includes a plurality of first portions 235 and one or more second portions 236. Outer wall 234 (e.g., sidewall) may extend between top surface and bottom surface of wafer 230. Each projection (e.g., 236) may extend along from top surface to bottom surface. Alternatively, at least one projection may only extend a portion of the way between the top and bottom surfaces. The one or more second portions 236 of outer wall 234 extend further from central axis 240 than a first portion 235 of the outer wall. For example, wafer 230 includes a first wafer radius R1 measured from central axis 240 of wafer 230 to first portion 235 of outer wall 234 along a straight line that is substantially orthogonal to the central axis. Each second portion 236 (e.g., projection) includes a second wafer radius R2 (e.g., projection radius) measured from central axis 240 of wafer 230 to an outermost portion of the projection 236 234 along a straight line that is substantially orthogonal to the central axis. In some implementations, second wafer radius R2 is at least 2 percent greater than first wafer radius R1 of an adjacent first portion 235. In some implementations, the change in radius from first wafer radius R1 and second wafer radius R2 defines an inflection point along the perimeter of the wafer. For example, each protrusion (e.g., 236) may be interposed between two inflection points defined along the perimeter of wafer.

As shown in FIG. 2, wafer 230 includes three projections (e.g., 236), however, in other implementations, wafer 230 may include more than two projections such as, for example, 2, 4, 5, 6, 7, 8, 9, 10, 11, 12, or more projections (e.g., 236). In some implementations, the plurality of second portions 236 may include a first projection (e.g., a gate stop 236a) and one or more second projections (e.g., centering spurs 236b). Gate stop 236a may include a width W2 that is greater than a width W1 of each centering spur 236b. In some implementations, centering spurs 236b are symmetrically arranged about gate stop 236a along outer wall 234 (e.g., centering spurs 236b may be positioned symmetrically about a plane that bisects gate stop 236a). For example, a first centering spur (e.g., 236b) may be spaced from gate stop 236a by a first angle 266 and a second centering spur (e.g., 236b) may be spaced from the gate stop by a second angle 268 that is equal and opposite of the first angle. In some implementations, angles 266, 268 may be greater than or equal to any of, or between any two of, the following: 5, 15, 25, 35, 45, 55, 65, 75, or 85, degrees. In the foregoing implementations, wafer 230 may decrease the risk of movement during an injection molding process (e.g., while wafer is disposed within a mold cavity) and the wafer can be remain centered. However, in other implementations, the plurality of second portions 236 may be sized and positioned at any suitable orientation, symmetrical or non-symmetrical, to prevent contamination from wafer 230 during a thermoforming or injection molding process. As shown in FIG. 2, width W2 of the gate stop is greater than width D5 of the spur. For example, spur 236b may include a width between 1 millimeter (mm) and 6 mm and gate stop may include a width between 4 and 14 mm.

Although, as shown, each second projection 236 includes radius R2, in other implementations, at least one second portion has a corresponding radius that is greater than R1 and different from R2. For example, a projection radius (e.g., R2) of the gate stop may be different than a projection radius (e.g., R2) of a centering spur. Likewise, centering spurs 236b may have different projection radii R2. In some implementations, a first centering spur (e.g., 236b) includes a radius R2 and a second centering spur includes a radius that is different than R2. In this manner, a number of projections (e.g., 236) in contact with a mold surface of the mold device (e.g., 161) may be reduced, minimizing the risk of the projections sticking to a surface of mold device while still keeping wafer 230 centered within the mold cavity. In some such implementations (e.g., blended radii), each radius of second portions 236 is within 5% of R2, preferably within 2% of R2.

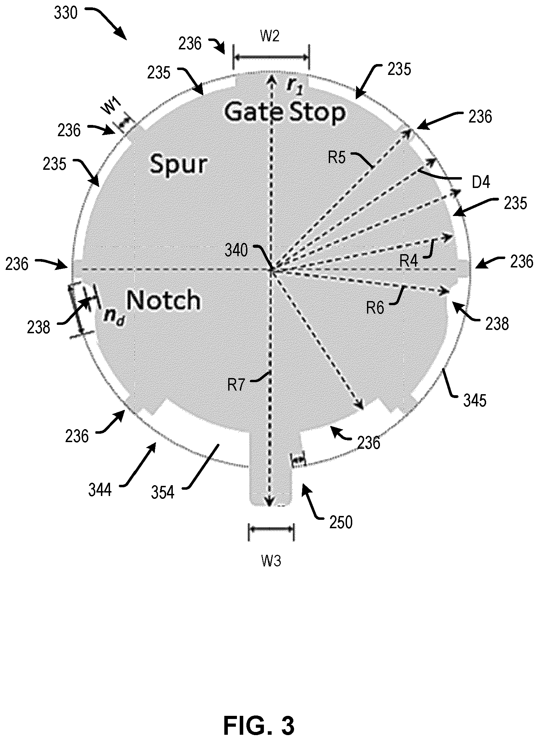

Outer wall 234 may, but need not, define one or more fourth portions 238. In such implementations, wafer 230 may define a single recess, as shown in FIG. 2, or a plurality of recesses (FIG. 3). Wafer 230 includes a third wafer radius R3 (e.g., recess radius) measured from central axis 240 of wafer 230 to an innermost portion of one of the fourth portion 138 along a straight line that is substantially orthogonal to the central axis. Third radius R3 is less than each of first radius R1 and second radius R2. Fourth portions 238 may reduce the circumference of wafer 230 to prevent wafer 230 from deforming (e.g., bending) during thermoforming. In some implementations, fourth portions 238 may be positioned symmetrically about wafer 230 to prevent movement of the wafer and to keep the wafer centered within the mold cavity (e.g., 154) during the injection molding process. For example, fourth portions 238 may be positioned symmetrically about a plane 260 that bisects gate stop 236a. In other implementations, the plurality of fourth portions 238 may be sized and positioned at any suitable orientation, symmetrical or non-symmetrical, to prevent defects from occurring during a thermoforming or injection molding process.

In some implementations, outer wall 234 includes a third portion 250 (e.g., a tab). Tab (e.g., 250) may be configured to easily align the wafer within the mold cavity. In such implementations, wafer 130 includes a tab radius R7 measured from central axis 240 of wafer 230 to an outermost portion of tab (e.g., 250) along a straight line that is substantially orthogonal to the central axis. Tab radius R7 may be greater than first, second, and third radius (R1, R2, R3). For example, a length of tab radius R7 may 1.1 to 1.8 times greater than a length of projection radius R2. In some implementations, tab radius R7 can be greater than or equal to any of, or between any two of, the following: 30, 35, 40, 45, 50, or 55 (mm). In this way, tab (e.g., 250) may be configured to extend out of the mold cavity (e.g., 154) during injection molding to enable alignment of the thermoformed wafer during injection molding. In some implementations, tab (e.g., 250) may be positioned opposite (e.g., 180 degrees) from a second portion 236 (e.g., gate stop 236a). In some implementations, a width W3 of tab (e.g., 250) may be any suitable dimension to align wafer 230 such as, for example, between 2 and 9 millimetres (mm) (e.g., from 4.6 to 6.6 (mm)). In some implementations (e.g., non-polar products), wafer 230 does not include tab (e.g., 250).

In some implementations, wafer 230 is configured for producing optical article (e.g., 102) and includes a laminate (e.g., 112) having a plurality of layers (e.g., 114, 116, 118). At least one of the layers includes an outer wall 234 between top surface and bottom surface. Outer wall 234 defines a plurality of first portions 235 and one or more features such as a plurality of second portions 236. Each first portion 235 includes a corresponding first radius R1 and each second portion 236 having a corresponding second radius R2 that is greater than the first radius.

In some of the foregoing implementations, wafer 230 is configured to be disposed within a cavity (e.g., 154) defined by a surface of a mold device (e.g., 161) during formation of the optical article. In such implementations, while wafer 230 is disposed within the cavity, at least one of the plurality of second portions 136 contact the surface of the mold to define a gap between each of the plurality of first portions 135 and the surface of the mold. In some implementations, outer wall 234 defines a third portion 250 having a third radius R7 that is greater than the second radius. The third portion (e.g., a notch or recess) may be configured to align wafer 230 in a mold cavity. In some implementations, outer wall 234 defines a fourth portion 238 having a fourth radius R3 that is less than first radius R1. Additionally, or alternatively, the fourth portion configured to prevent movement of the wafer while disposed within the cavity.

In some implementations, second portion 236 includes a plurality of spurs 236b. Additionally, or alternatively, second portion 236 includes a gate stop 236a. In some such implementations, width W2 of the gate stop is greater than width W1 of the spur. For example, spur 236b may include a width between 1 millimeter (mm) and 6 mm and gate stop may include a width between 4 and 14 mm. In some implementations, third portion 250 includes tab (e.g., 250). In some implementations, fourth portion comprises a fourth portion 238 (e.g., a notch). In some of the foregoing implementations, the plurality of spurs 236b are positioned symmetrically about a first plane (orthogonal to top surface, bottom surface, or both) that extends from a center of gate stop 236a to a center of tab (e.g., 250).

In some implementations, each second portion 236 is interposed between two corresponding first portions of the plurality of first portions 235. In some of the foregoing implementations, the plurality of first portions 235 comprise a majority of the area of outer wall 234 of at least one layer. Each radius of the first (R1), second (R2), third (R7), or fourth (R3) radii is measured from a longitudinal axis to outer wall 234, the longitudinal axis being orthogonal to top surface of wafer 230 and intersecting a center 233 of the wafer. In some implementations, each second radius R2 of the plurality of second portions 236 is substantially equal. In some of the foregoing implementations, outer wall 234 defines a first radius of curvature at an intersection of at least one first portion of the plurality of first portions 235 and a second portion of the plurality of second portions 236.

Referring now to FIG. 3, aspects of a wafer 330, for use in manufacture of an optical article, are shown. For example, FIG. 3 shows a top view of an example of wafer 330 disposed within a mold insert 344 of a mold device (e.g., 161). Wafer 330 may include or correspond to wafer 130, 142, 230. Additionally, or alternatively, insert 344 may include or correspond to insert 144. In the depicted implementation, insert includes a wall 345 (e.g., mold cavity wall) that defines cavity 354. As shown, wafer 330 is generally circular, however, wafer 330 may be elliptical, rounded, or otherwise suitably shaped to form an optical article.

As shown, wafer 330 is thermoformed to fit within mold insert 344. Wafer 330 may include a plurality of first portions 235, a plurality of second portions 236 (e.g., projections), a plurality of fourth portions 238 (e.g., recesses), and a third portion 250 (e.g., a tab). For example, FIG. 3 depicts an implementation having seven second portions 236 (one gate stop 236a and six centering spurs 236b) and four fourth portions 238. As shown, first portions 235 correspond to a first arc radius R4, second portions 236 correspond to a second arc radius R5, and fourth portions 238 correspond to a third arc radius R6; each radius being measured from a central axis 340 to a center of the corresponding feature. Additionally, or alternatively, tab arc radius R7 corresponds to tab (e.g., 250). In the depicted implementation, first are radius R4 is less than an arc length D4 (e.g., arc radius) of mold cavity 354 measured from the center of the mold cavity to mold wall 345 along the mold surface. Additionally, or alternatively, second arc radius R5 is substantially equal to arc length D4. In this way, first portions 235 may not contact a surface of a mold component (e.g., sidewall of mold block) that defines mold cavity 354 when wafer 330 is centered within the mold cavity. Accordingly, wafer 330 may prevent outflow (edge bleed, ooze) from an elastomeric layer (e.g., inner layer 114) from reaching and contaminating the mold device. To illustrate, the gap formed between first portions 235 and an edge of mold insert (e.g., 144) may allow moldable material to reach outer wall 234 and encapsulate any liquefied material that oozes out from inner layer to prevent the liquefied material from contacting a sidewall (e.g., 164) of mold block (e.g., 162) or running or flowing into a space between the mold inserts and the mold block. In one example, wafer 230 blocks any excess outflow from a center film layer (e.g., 114) from advancing more than 0.5 mm from outer wall 234. In some implementations, the plurality of first portions 235 of outer wall 234 may collectively span a majority of a surface area of the outer wall. For example, first portions 235 may span a portion of a total surface area of outer wall 234 that is greater than or equal to any of, or between any two of, the following: 30, 40, 50, 60, 70, 80, 90, or 95%.

Second portions 236 (e.g., projections) may define a second arc radius R5 of wafer 330 measured from a central axis 340 of wafer 330 to an outermost portion of the projection along a straight line taken along a surface (e.g., convex surface) of the wafer. As shown, second arc radius R5 is substantially equal to arc length D4 (e.g., arc radius) of mold cavity 354. Accordingly, at least one of the second portions 236 may contact a surface of a mold component (e.g., sidewall of mold block) that defines mold cavity 354 when wafer 330 is centered within the mold cavity. In this manner, second portions 236 may stabilize wafer 330 during the injection molding process. For example, wafer 330 may include a plurality of second portions 236 spaced along outer wall 234 to prevent the wafer from moving within the mold cavity. As such, wafer 330 may remain centered during the entire injection molding process to produce high-quality optical wafers. In some implementations, less than 10 percent of outer wall 234 of wafer 230 contacts a surface of the mold device. For example, wafer 230 may be disposed within mold cavity 354 such a portion of a total surface area of outer wall 234 that contacts the mold device is equal to any of, or between any two of, the following: 0.5, 1, 2, 3, 4, 5, 6, 7, or 8%.

In some implementations, gate stop 236a may be configured to extend at least partially within a gate of a mold cavity 354 to prevent molten material (e.g., polycarbonate) from flowing on a convex side of the wafer. To illustrate, during an injection molding process, moldable material may be dispersed through the gate of the mold cavity onto a concave side of wafer 330. Accordingly, gate stop 236a may extend up to, or partially within, the gate to prevent movement of wafer 330 during the initial stage of the polycarbonate mold filling process and prevent the molten polycarbonate from flowing on the convex side of the wafer.

Spurs 236b (e.g., centering spurs) may be configured to align wafer within mold cavity 354 during the injection molding process. As shown, centering spurs 236b may be positioned symmetrically about wafer 330. For example, centering spurs 236b are positioned symmetrically about a plane that extends from central axis 240 to a central portion of gate stop 236a. In some implementations, centering spurs 236b may arranged in pairs such that each centering spur is positioned opposite of a respective centering spur. In the foregoing implementations, centering spurs 236b may prevent movement of wafer 330 toward tab (e.g., 250) and keep the wafer centered in molding cavity 354 during the injection molding process.

Fourth portions 238 may define a third arc radius R6 of wafer 330 measured from central axis 340 of wafer 330 to an outermost portion of the recess along a straight line taken along a surface (e.g., convex surface) of the wafer. In the depicted implementation, third arc radius R6 is less than arc length D4 (e.g., arc radius) of mold cavity 354. In this way, fourth portions 238 may define a gap between surfaces of a mold component (e.g., sidewall of mold block) that defines mold cavity 354 when wafer 330 is centered within the mold cavity. Accordingly, fourth portions 238 may prevent outflow from an elastomeric layer (e.g., inner layer 114) from reaching and contaminating the mold device. To illustrate, moldable material may flow into the gap formed between fourth portions 238 and an edge of mold insert to encapsulate liquefied material that oozes out from inner layer to prevent the liquefied material from contaminating the mold inserts and/or the mold block (e.g., 162).

As shown in FIG. 3, fourth portions 238 (e.g., recesses) may be formed adjacent to tab (e.g., 250). For example, third portion 250 (e.g., tab) may be interposed between a first recess (e.g., 238) and a second recess (e.g., 238) of wafer 230. Fourth portions 238 formed adjacent to tab (e.g., 250) may prevent outflow of the elastomeric layer from contaminating the tab and or an edge of the optical article. In some implementations, recesses may prevent wafer 230 from reaching and bending over the optical article near tab (e.g., 250). In some implementations, recess may be formed adjacent to a second portion 236 such as, for example, a centering spur 236b. Such recesses (e.g., 238) may prevent movement of wafer 230 over the optical article and can keep wafer 230 centered in cavity 354.

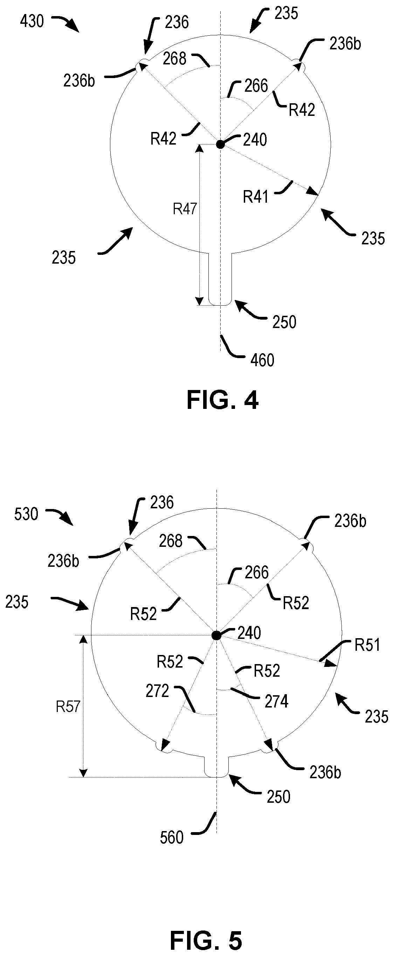

Referring now to FIGS. 4-7, additional examples of wafers (e.g., wafer designs) for use in the manufacture of an optical article. For example, FIGS. 4-7 show a top view of an example of a thermoformed wafer 430, 530, 630, and 730 respectively. Wafers 430, 530, 630, and 730 may include or correspond to wafer 130 and/or wafer 230.

As shown in FIG. 4, thermoformed wafer 430 includes a plurality of first portions 235, a plurality of second portions 236 (e.g., centering spurs), and a third portion 250 (e.g., tab). Second portions 236 (e.g., projections) are symmetrically positioned about a plane 460. In some implementations, plane 460 bisects wafer 430. For example, plane 460 may extend from a center of tab (e.g., 250) and intersects central axis 240 of wafer 430. In some implementations, plane 460 is coplanar with central axis 240. In the depicted implementation, wafer 430 includes two centering spurs 236b symmetrically spaced about plane 460. To illustrate, a first centering spur (e.g., 236b) is spaced from plane 460 by first angle 266 and a second centering spur (e.g., 236b) is spaced from the plane by second angle 268 that is equal and opposite of the first angle. As shown, first and second angles 266, 268 are substantially equal to 45 degrees.

Wafer 430 includes a first radius R41 that corresponds to the plurality of first portions 235 and a second radius R42 that corresponds to the plurality of second portions 236. First radii R41 are measured from central axis 240 of wafer 430 to the first portions 235 along a convex surface of the wafer and second radii R42 are measured from the central axis of wafer 430 to the second portions 236 along a convex surface of the wafer. As shown, wafer 430 includes a tab radius R47 measured from central axis 240 of the wafer to an outermost portion of tab (e.g., 250) along first plane 460.

Each second radius R42 is greater than first radii R41 and less than tab radius R7. To illustrate, in an implementation where wafer 430 is fabricated from a 76 mm, 4.25 base mm lens, second radius R42 is substantially equal to 38 mm, as an illustrative, non-limiting example. In such implementations, tab radius R47 is substantially equal to 50 mm. Additionally, or alternatively, a width (e.g., W1 of FIG. 2) of each centering spur 236b is substantially equal to 2.5 mm and a width (e.g., W3 of FIG. 2) of tab (e.g., 250) is substantially equal to 6.6 mm.

Referring now to FIG. 5, thermoformed wafer 530 is shown. Wafer 530 includes a plurality of first portions 235, a plurality of second portions 236 (e.g., centering spurs 236b), and a third portion 250 (e.g., a tab). Second portions 236 are symmetrically positioned about a plane 560 which extends from a center of tab (e.g., 250) and intersects central axis 240 of wafer 530. In some implementations, plane 460 is coplanar with central axis 240. In the depicted implementation, wafer 530 includes four centering spurs 236b symmetrically spaced about plane 460. To illustrate, a first centering spur (e.g., 236b) is spaced from plane 460 by first angle 266 and a second centering spur (e.g., 236b) is spaced from the plane by second angle 268 that is equal and opposite of the first angle. Further, a third centering spur (e.g., 236b) is spaced from plane 460 by a third angle 272 and a fourth centering spur (e.g., 236b) is spaced from the plane by a fourth angle 274 that is equal and opposite of the first angle. As shown, first and second angles 266, 268 are substantially equal to 45 degrees and third and fourth angles 272, 274 are substantially equal to 25 degrees.

Wafer 530 includes a first radius R51 that corresponds to the plurality of first portions 235 and a second radius R52 that corresponds to the plurality of second portions 236. First radii R51 are measured from central axis 240 of wafer 530 to the first portions 235 along a convex surface of the wafer and second radii R52 are measured from the central axis of wafer 530 to the second portions 236 along a convex surface of the wafer. As shown, wafer 530 includes a tab radius R57 measured from central axis 240 of the wafer to an outermost portion of tab (e.g., 250) along first plane 560.

Each second radius R52 is greater than first radii R51 and less than tab radius R57. For example, in an implementations where wafer 530 is fabricated from a 76 mm, 4.25 base mm lens, second radius R52 is substantially equal to 38 mm. In some implementations, second radii R52 may be blended. For example, second radius R52 of a first centering spur (e.g., 236b) may equal 37 mm and second radius R52 of a second centering spur (e.g., 236b) may equal 38 mm to minimize the risk of the second portions 236 sticking to a mold device while still allowing wafer 230 to remain centered within a mold cavity. In such implementations, tab radius R57 is substantially equal to 44 mm. Additionally, or alternatively, a width (e.g., W1 of FIG. 2) of each centering spur 236b is substantially equal to 5 mm and a width (e.g., W3 of FIG. 2) of tab (e.g., 250) is substantially equal to 6.6 mm.

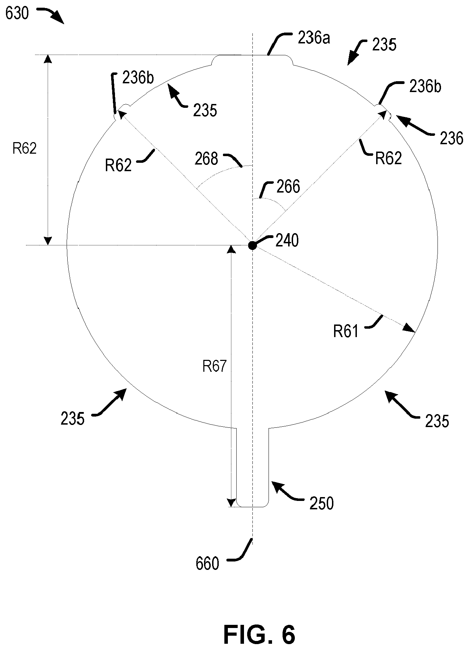

Referring now to FIG. 6, thermoformed wafer 630 is shown. Wafer 630 includes a plurality of first portions 235, a plurality of second portions 236 (e.g., centering spurs 236b and gate stop 236a), and tab (e.g., 250). Second portions 236 are symmetrically positioned about a plane 660 which extends from a center of tab (e.g., 250) to a center of gate stop 236a and intersects central axis 240 of wafer 630. In some implementations, plane 460 is coplanar with central axis 240. In the depicted implementation, wafer 630 includes two centering spurs 236b and a gate stop 236a. The centering spurs 236b are symmetrically spaced about plane 460 (e.g, a center of gate stop 236a). To illustrate, a first centering spur (e.g., 236b) is spaced from plane 460 by first angle 266 and a second centering spur (e.g., 236b) is spaced from the plane by second angle 268 that is equal and opposite of the first angle. As shown, first and second angles 266, 268 are substantially equal to 45 degrees.

Wafer 630 includes a first radius R61 that corresponds to the plurality of first portions 235 and a second radius R62 that corresponds to the plurality of second portions 236. First radii R61 are measured from central axis 240 of wafer 630 to the first portions 235 along a convex surface of the wafer and second radii R62 are measured from the central axis of wafer 630 to the second portions 236 along a convex surface of the wafer. As shown, wafer 630 includes a tab radius R67 measured from central axis 240 of the wafer to an outermost portion of tab (e.g., 250) along first plane 660.

Each second radius R62 is greater than first radii R61 and less than tab radius R67. For example, in an implementations where wafer 630 is fabricated from a 76 mm, 4.25 base mm lens, second radius R62 is substantially equal to 38 mm. In some implementations, second radii R62 may be blended. In some implementations, tab radius R57 is substantially equal to 53 mm. Additionally, or alternatively, a width (e.g., W1 of FIG. 2) of each centering spur 236b is substantially equal to 2.5 mm, a width (e.g., W2 of FIG. 2) of gate stop 236a is substantially equal to 15 mm, and a width (e.g., W3 of FIG. 2) of tab (e.g., 250) is substantially equal to 6.6 mm.

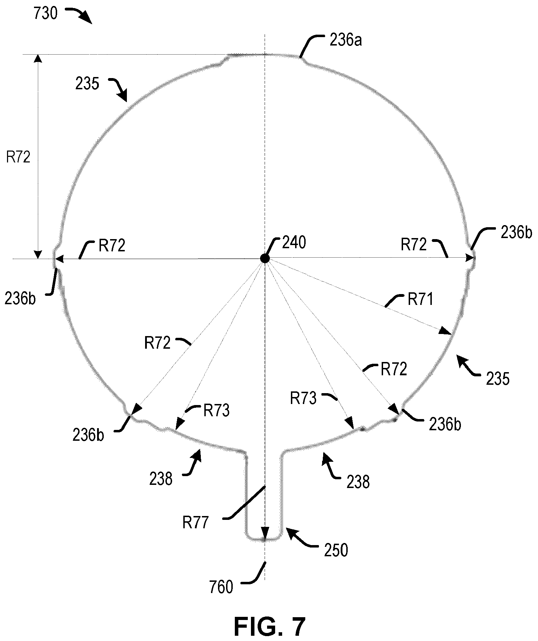

Referring now to FIG. 7, thermoformed wafer 730 is shown. Wafer 730 includes a plurality of first portions 235, a plurality of second portions 236 (e.g., centering spurs 236b and gate stop 236a), a plurality of fourth portions 238 (e.g., recesses), and a third portion 250 (e.g., a tab). Second portions 236 are symmetrically positioned about a plane 760 which extends from a center of tab (e.g., 250) to a center of gate stop 236a and intersects central axis 240 of wafer 630. Additionally, or alternatively, fourth portions 238 (e.g., recesses) are symmetrically positioned about plane 760. In some implementations, plane 460 is coplanar with central axis 240. In the depicted implementation, wafer 730 includes four centering spurs 236b a gate stop 236a, and two recesses (e.g., fourth portions 238). The centering spurs 236b are symmetrically spaced about plane 760 (e.g, a center of gate stop 236a).

Wafer 730 includes a first radius R71 that corresponds to the plurality of first portions 235 and a second radius R72 that corresponds to the plurality of second portions 236. First radii R71 are measured from central axis 240 of wafer 730 to the first portions 235 along a convex surface of the wafer and second radii R72 are measured from the central axis of wafer 730 to the second portions 236 along a convex surface of the wafer. As shown, wafer 730 includes a tab radius R77 measured from central axis 240 of the wafer to an outermost portion of tab (e.g., 250) along first plane 760. In the depicted implementation, wafer 730 includes a third radius R73 measured from measured from the center (e.g., 240) of the wafer to the fourth portions 238 along the convex surface of the wafer.

Each second radius R72 is greater than first radii R71 and less than tab radius R67. Additionally, or alternatively, third radius R76 is less than first radius R71. For example, in an implementations where wafer 730 is fabricated from a 76 mm, 4.25 base mm lens, second radius R72 is substantially equal to 38 mm. In some implementations, second radii R72 may be blended. In some implementations, tab radius R57 is substantially equal to 52 mm and third radius R73 is substantially equal to 36 mm. Additionally, or alternatively, a width (e.g., W1 of FIG. 2) of each centering spur 236b is substantially equal to 2.5 mm, a width (e.g., W2 of FIG. 2) of gate stop 236a is substantially equal to 13 mm, and a width (e.g., W3 of FIG. 2) of tab (e.g., 250) is substantially equal to 6 mm. As shown, outer wall 234 may include an inflection point at a portion where first portions 235 transitions to second portions 236 (e.g., projections) and fourth portions 238 (e.g., recesses).

Although wafers 430, 530, 630, 730 are described above with reference to specific features (e.g., tab, gate stop, recesses) and dimensions (e.g., radius, widths, angles), each of the aforementioned wafers may be modified as described herein to disclose another implementation of the present wafers. For example, an angle (e.g., 266, 268) may be modified to position projections (e.g., 236) at any desired position along the outer wall (e.g., 234). Additionally, or alternatively, the radii of the first portions 235, second portions 236 (e.g., projections), and/or fourth portions 238 (e.g., recesses) may be modified to fit wafer within the cavity of the mold.

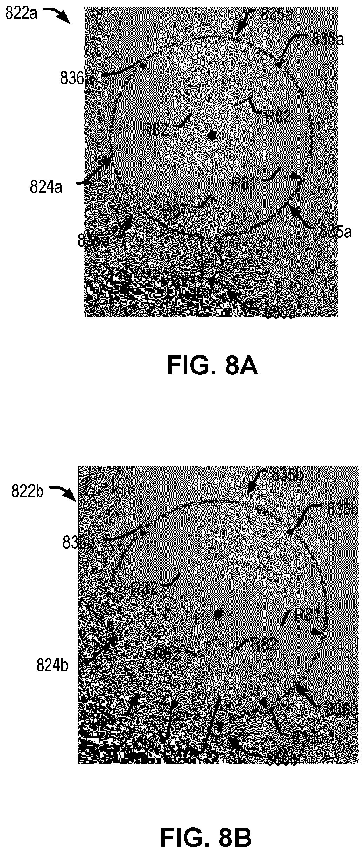

Referring now to FIGS. 8A and 8B, examples of dies, such as cutting dies, for use in the manufacture of an optical article are shown. For example, FIG. 8A shows a top view of an example of a die 822a used to form a wafer and FIG. 8B shows a top view of another example of a die 822b used to form a wafer. Dies are configured to engage a portion of a laminate to apply heat and/or pressure to remove a wafer from the laminate. Die (e.g., 822a, 822b) may include or correspond to die 122 and may be used to manufacture wafer 130, 230, 330, 430, 530, 630, 730.

As shown in FIG. 8A, die 822a includes a cutting edge 824a (e.g., sidewall) that corresponds to an outer wall of a wafer. In some implementations, cutting edge 824a includes a knife die, blanking die, rolling die, or the like. Die 822a may include one or more features that correspond to the first portions, projections, recesses, and/or tabs of the wafer. For example, cutting edge 824a includes a plurality of first portions 835a, a plurality of second portions 836a, and a third portion 850a. In some implementations, first portions 835a includes a first radius R81 that corresponds to first portions (e.g., 135, 235) of the wafer. Additionally, or alternatively, second portions 836a include a second radius R82 that corresponds to projections (e.g., 136, 236) and third portion 850a include a third radius R87 that corresponds to tab (e.g., 150, 250) of the wafer. In such implementations, second radius R82 is greater than first radius R81 and third radius R87 is greater than second radius R82. As shown in FIG. 8A, cutting edge 824a includes two second portions 836a and a third portion 850a.

As shown in FIG. 8B, die 822b includes a cutting edge 824b (e.g., sidewall) that corresponds to an outer wall of a wafer. In some implementations, cutting edge 824b includes a knife die, blanking die, rolling die, or the like. Die 822b may include one or more features that correspond to the first portions, projections, recesses, and/or tabs of the wafer. For example, cutting edge 824b includes a plurality of first portions 835b, a plurality of second portions 836b, and a third portion 850b. In some implementations, first portions 835b includes a first radius R81 that corresponds to first portions (e.g., 135, 235) of the wafer. Additionally, or alternatively, second portions 836a include a second radius R82 that corresponds to projections (e.g., 136, 236) and third portion 850a include a third radius R87 that corresponds to tab (e.g., 150, 250) of the wafer. In such implementations, second radius R82 is greater than first radius R81 and third radius R87 is greater than second radius R82. As shown in FIG. 8B, cutting edge 824b includes four second portions 836b and a third portion 850a. Although not shown, cutting edge 824a, 824b may include a fourth portion having a fourth radius that corresponds to recesses (e.g., 138, 238) of the wafer.

In some implementations, the system (e.g., 100) includes a die for forming a wafer used in manufacture of an optical article. In such implementations, die (822a, 822b) includes a sidewall (824a, 824b) that defines a plurality of first portions (835a, 835b), a plurality of second portions (836a, 836b), and a third potion (850a, 850b). In some of the foregoing implementations, each first portion (835a, 835b) includes a corresponding first radius R81. In some such implementations, each second portion (836a, 836b) includes a corresponding second radius R82 that is greater than first radius R81. In some of the foregoing implementations, sidewall (824a, 824b) includes third portion (850a, 850b) having a third radius R87 that is greater than second radius R82.

It is noted that with reference to FIGS. 1A, 1B, 2-7, 8A, and 8B, points on an optical film can be described using the radial arc length distance "r", using the cylindrical coordinate radius "R" from a center (e.g., 133), or using the angle ϕ between a central axis and a line segment from a center of curvature of the wafer to a point on the outer wall (e.g., 134) of the wafer. Accordingly, relationships between different portions of a wafer (e.g., a planar wafer or a thermoformed wafer) described herein are not to be limited based on any particular description or terminology (e.g., arc length distance "r", radius "R", or angle "ϕ").

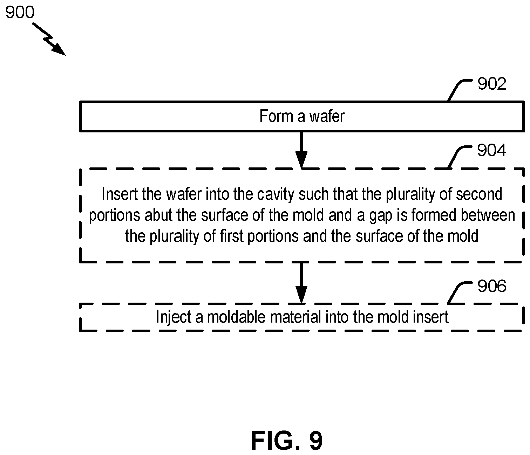

Referring to FIG. 9, an example of a method of forming one or more wafers is shown. Method 900 may be performed by or using one or more components as described with reference to FIGS. 1-8. For example, method 900 may be performed by one or more components of system 100, such as thermoform equipment 141, mold device 161, or moldable material 156. In some implementations, method 900 may be performed or initiated by a control device or a control system, such as a processor coupled to memory. Method 900 includes forming an optical article (e.g., lens). The optical article may include or correspond to optical article 102. In some implementations, optical article is a semi-finished lens, while in other implementations, optical article 102 is a finished lens.

Method 900 includes forming a wafer, at 902. For example, wafer may include or correspond to wafer 130, 230, 330, 430, 530, 630, 730. In some implementations, the wafer includes a plurality of first portions (135, 235) having a corresponding first radius (R1) or arc radius (R4), a plurality of projections (136, 236) having a corresponding second radius (R2) or arc radius (R5) that is greater than the first radius, one or more recesses (138, 238) having a corresponding third radius (R3) or arc radius (R6) that is less than the first radius, a tab (150, 250) having a corresponding radius (R7) that is greater than the second radius, or combination thereof. In some implementations, method 900 may include forming a wafer having at least three layers in which a middle layer (e.g., 114) of the wafer includes a thermoplastic matrix material. The thermoplastic matrix material of the middle layer of the wafer may have a glass-transition temperature that is less than a glass transition temperature of one of the other layers of the wafer. In some implementations, forming the wafer includes cutting from laminate using a cutting tool/die. Additionally or alternatively, forming the wafer includes performing thermoforming process on a planar wafer to form the wafer which is thermoformed.

In some implementations, method 900 may include inserting the wafer into a cavity (e.g., 154) such that the plurality of projections abut a surface (e.g., 145) of the mold device (e.g., 161) and a gap is formed between the plurality of first portions and the surface of the mold, at 904. In some implementations, the mold device includes or corresponds to mold device 161 having a mold block 162 and inserts 144, 152 movable relative to each other to define the cavity 154. Inserting the wafer into a cavity may be done by a human operator, a machine, or both. In some such implementations, less than 10% of an outer wall (134, 234) of the wafer may be in contact with the mold device while the wafer is inserted into the cavity. Some methods may include aligning a top of the wafer with a gate of the mold device.

In some of the foregoing implementations, method 900 may include injecting a moldable material into the cavity, at 904. In some implementations, method 900 includes setting the moldable material to form a semi-finished lens including the wafer and the moldable material. Injecting the moldable material into the cavity may include injecting the moldable material into the mold cavity via a gate. Some of the foregoing methods include distributing the moldable material into a gap defined between the outer wall of the wafer and a surface of the mold insert. In some implementations, the gap is defined between a first portion of the wafer and the surface of the mold insert.

In some implementations, method 900 may include removing the optical article (e.g., semi-finished lens or finished lens) from the mold cavity. After removing the optical article, method 900 may also include inserting a second wafer into the mold cavity. As described above, method 900 enables manufacturing of an optical article without contamination of a mold (e.g., mold cavity, inserts, mold block). Accordingly, method 900 enables faster manufacturing times, increased product yields, and decreased maintenance during the manufacture of the optical article.

The above specification provides a complete description of the structure and use of illustrative configurations. Although certain configurations have been described above with a certain degree of particularity, or with reference to one or more individual configurations, those skilled in the art could make numerous alterations to the disclosed configurations without departing from the scope of this disclosure. As such, the various illustrative configurations of the methods and systems are not intended to be limited to the particular forms disclosed. Rather, they include all modifications and alternatives falling within the scope of the claims, and configurations other than the one shown may include some or all of the features of the depicted configurations. For example, elements may be omitted or combined as a unitary structure, connections may be substituted, or both. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one configuration or may relate to several configurations. Accordingly, no single implementation described herein should be construed as limiting and implementations of the disclosure may be suitably combined without departing from the teachings of the disclosure.

The previous description of the disclosed implementations is provided to enable a person skilled in the art to make or use the disclosed implementations. Various modifications to these implementations will be readily apparent to those skilled in the art, and the principles defined herein may be applied to other implementations without departing from the scope of the disclosure. Thus, the present disclosure is not intended to be limited to the implementations shown herein but is to be accorded the widest scope possible consistent with the principles and novel features as defined by the following claims. The claims are not intended to include, and should not be interpreted to include, means-plus- or step-plus-function limitations, unless such a limitation is explicitly recited in a given claim using the phrase(s) "means for" or "step for," respectively.

## Claims

1. A system for producing an optical article, the system comprising:
a wafer comprising a laminate, the laminate comprising a plurality of layers, at least one layer of the plurality of layers comprising:
an outer wall between a top surface of the wafer and a bottom surface of the wafer, the outer wall defining:
a plurality of first portions, each first portion having a corresponding first radius; and
a plurality of second portions, each second portion having a corresponding second radius that is greater than the first radius.

2. The system of claim 1, wherein:
the wafer is configured to be disposed within a cavity defined by a surface of a mold during formation of the optical article; and
while the wafer is disposed within the cavity, at least one of the plurality of second portions contacts the surface of the mold to define a gap between each of the plurality of first portions and the surface of the mold.

3. The system of claim 2, wherein:
the outer wall further defines a third portion having a third radius that is greater than the second radius, the third portion configured to align the wafer in a mold cavity; and
optionally, the outer wall further defines a fourth portion having a fourth radius that is less than the first radius, the fourth portion configured to prevent movement of the wafer while disposed within the cavity.

4. The system of claim 3, wherein:
the second portion comprises a plurality of spurs
the third portion comprises a tab;
the fourth portion comprises a notch; and
optionally, each spur has a width between 1 millimeter (mm) and 6 mm.

5. The system of claim 4, wherein:
the second portion comprises a gate stop;
a width of the gate stop is greater than a width of the spur; and
optionally:
the plurality of spurs are positioned symmetrically about a first plane that extends from a center of the gate stop to a center of the tab; or
the width of the gate stop is between 4 and 14 mm.

6. The system of claim 1, wherein the plurality of second portions are positioned symmetrically about a central axis that is orthogonal to the top surface of the wafer.

7. The system of claim 1, wherein:
each second portion is interposed between two of the plurality of first portions;
optionally, the plurality of first portions comprise a majority of an area of the outer wall of the at least one layer.

8. The system of claim 3, wherein:
each radius of the first, second, third, or fourth radii is measured from a longitudinal axis to the outer wall, the longitudinal axis being orthogonal to the top surface of the wafer and intersecting a center of the wafer; and
each second radius of the plurality of second portions is substantially equal.

9. The system of claim 1, wherein the outer wall defines a first radius of curvature at an intersection of at least one first portion of the plurality of first portions and a second portion of the plurality of second portions.

10. The system of claim 1, wherein the plurality of layers comprise:
an inner layer having an upper surface and a lower surface;
a first outer layer coupled to the lower surface of the inner layer and comprising the bottom surface of the wafer;
a second outer layer coupled to the upper surface of the inner layer and comprising the top surface of the wafer; and
optionally, the at least one layer comprises the inner layer, the first outer layer, the second outer layer, or a combination thereof.

11. The system of claim 10, wherein:
the inner layer includes a first matrix material;
at least one of the first and second outer layers includes a second matrix material; and
a glass transition temperature of the first matrix material is lower than a glass transition temperature of the second matrix material;
at least one of the first and second outer layers includes a thickness that is greater than a thickness of the inner layer; and
optionally:
the thickness of the inner layer is less than or equal to 0.100 millimeters (mm);
the thickness of the at least one of the first and second outer layers is greater than 0.250 mm;
the first matrix material comprises a thermoplastic polyurethane (TPU) or a semi-crystalline polyether-block polyamide (PEBA); or
the second matrix material comprises a polycarbonate.

12. A method of forming a lens comprising:
forming the wafer of any of claims 1-11.

13. The method of claim 12, wherein forming the wafer comprises:
inserting the wafer into the cavity such that the plurality of second portions about the surface of the mold and a gap is formed between the plurality of first portions and the surface of the mold; and
injecting a moldable material into the cavity.

14. The method of claim 13, further comprising:
distributing the moldable material into a gap defined between the outer wall of the wafer and a wall of the mold insert; and
optionally, wherein injecting the moldable material into the cavity of the mold insert via a gate.

15. A die for forming a wafer that is for use in making an optical article, the die comprising:
a sidewall defining:
a plurality of first portions, each first portion having a corresponding first radius;
a plurality of second portions, each second portion having a corresponding second radius that is greater than the first radius; and
a third portion having a third radius that is greater than the second radius.
